# EUROPÄISCHE PATENTANMELDUNG

(11) **EP 1 167 182 A2**
(43) Veröffentlichungstag der Anmeldung: **02.01.2002**
(21) Anmeldenummer: 01113700.7
(22) Anmeldetag: 21.06.2001
(51) Int. Cl.: B64C 1/14

(54) **Einrichtung zum elektrischen Betätigen einer Tür eines Luftfahrzeugs**

(30) Priorität: 29.06.2000 DE 10032851
(71) Anmelder: ESW-EXTEL SYSTEMS WEDEL Gesellschaft für Ausrüstung mbH, D-22880 Wedel (DE)
(72) Erfinder: Marquard, Helmut, 25492 Heist (DE); Schreger, Adolf, 25421 Pinneberg (DE)
(74) Vertreter: Freitag, Joachim (DE)

(57) **Zusammenfassung**

Die Erfindung betrifft eine Einrichtung zum elektrischen Betätigen einer Tür eines Luftfahrzeugs, insbesondere eine elektrische Antriebseinrichtung zum Betätigen von Kabinentüren von Verkehrsflugzeugen.
Die Aufgabe, eine neue Möglichkeit zur Betätigung der Türen von Luftfahrzeugen zu finden, die ein elektrisches Betätigen der Tür mit sehr hoher Zuverlässigkeit bei geringstem Gewichtsaufwand gewährleistet, wird bei einer Einrichtung zum elektrischen Betätigen einer Tür eines Luftfahrzeugs erfindungsgemäß gelöst, indem zur Betätigung der Tür eine elektrisch angetriebene Abtriebswelle (1) vorgesehen ist, die an wenigstens einen Hebelarm der Türmechanik drehfest gekoppelt ist und durch deren Drehung der Hebelarm der Türmechanik um einen vorbestimmten Winkel verschwenkt wird. Dabei wirken mindestens zwei voneinander unabhängige elektrische Antriebe (22,23) auf die Abtriebswelle ein, wobei die Antriebe jeweils über eine Koppelmechanik (24,34) zur Aufnahme der der Antriebsdrehrichtung entgegengesetzten Drehmomente an einem Strukturteil (4), gegenüber dem der Hebelarm der Türmechanik geschwenkt wird, befestigt sind und die Koppelmechanik (24,34) in Rotationsrichtung jedes Antriebs entkoppelbar ist.

## Beschreibung

Die Erfindung betrifft eine Einrichtung zum elektrischen Betätigen einer Tür eines Luftfahrzeugs, insbesondere eine elektrische Antriebseinrichtung zum Öffnen und
Schließen und/oder Verriegeln und Entriegeln von Kabinentüren von Verkehrsflugzeugen.
In üblicher Weise werden die Kabinentüren von Verkehrsflugzeugen manuell betätigt. mit dem Nachteil, dass bei großen Windlasten oder Schieflagen des Verkehrsflugzeugs große körperlich Kräfte aufgebracht werden müssen, die teilweise durch einen große Hebelarm wieder kompensiert werden, dadurch aber einen Kinematik und Gewichtsnachteil bringen.
Vereinzelt werden Flugzeugtüren mit einem zusätzlichen elektrischen Antrieb ausgerüstet, hauptsächlich um die Bedienung für das Servicepersonal zu erleichtern. Dieser elektrische Antrieb wird in Anpassung an die Türmechanik und den meist vorhandenen pneumatischen Linearaktuator zur Unterstützung des Notbetriebs und zur Dämpfung der Öffnungsbewegung dann vorzugsweise als Linearantrieb ergänzt. Konventionelle elektrische Antriebe haben über die Wirkungskette Elektronik, Motor, Untersetzungsgetriebe eine geringere Zuverlässigkeit sowie die Gefahr des Blockierens der Antriebslinie, gerade auf der hochdrehenden Seite des Getriebes mit dem Übergang zum Motor. Eine solche Blockade des Abtriebs könnte zwar durch eine Kupplung am Getriebe einfach aufgehoben werden, die jedoch für die großen Kräfte des Abtriebs ausgelegt werden müsste und dementsprechend vor allem wegen der Gewichtsnachteile für einen Türantrieb nicht praktikabel ist.

Der Erfindung liegt die Aufgabe zugrunde, eine neue Möglichkeit zur Betätigung der Türen von Luftfahrzeugen zu finden, die ein elektrisches Betätigen der Tür mit sehr hoher Zuverlässigkeit bei geringstem Gewichtsaufwand gewährleistet.

Erfindungsgemäß wird die Aufgabe bei einer Einrichtung zum elektrischen Betätigen einer Tür eines Luftfahrzeugs, dadurch gelöst, dass zur Betätigung der Tür eine elektrisch angetriebene Abtriebswelle vorgesehen ist, wobei diese Abtriebswelle an wenigstens einen Hebelarm einer Türmechanik drehfest gekoppelt ist und durch Drehung der Abtriebswelle den Hebelarm der Türmechanik um einen vorbestimmten Winkel verschwenkt. Als Türmechanik kommen sowohl die Öffnungs- und Schließmechanik als auch die Ver- und Entriegelungsmechanik in Frage.
Vorteilhaft wirken mindestens zwei voneinander unabhängige elektrische Antriebe auf die Abtriebswelle ein und die Antriebe sind jeweils über eine Koppelmechanik zur Aufnahme der der Antriebsdrehrichtung entgegengesetzten Drehmomente an einem Strukturteil, gegenüber dem der Hebelarm der Türmechanik geschwenkt wird, befestigt, wobei die Koppelmechanik in Rotationsrichtung des Antriebs entkoppelbar ist. Dabei können die Antriebe zweckmäßig an einem Strukturteil der Tür befestigt, an einem beweglichen Hebelarm (ebenfalls ein Strukturteil) der Tür oder an einem Strukturteil des Flugzeugrumpfes befestigt sein.
Die Koppelmechanik ist vorteilhaft als sperrbare Drehführung ausgelegt, wobei zweckmäßig zwischen dem am Strukturteil befestigten Teil und dem mit einem Antriebsgehäuse verbundenen Teil entfernbare Blockierstifte eingeschoben sind.
Die Antriebe üben vorzugsweise gleichzeitig die Antriebsfunktion auf die Abtriebswelle aus. Es ist aber auch vorteilhaft, wenn die Antriebe abwechselnd auf die Abtriebswelle eine Antriebsfunktion ausüben, wobei dazu der passive Antrieb stromlos und mittels der Koppelmechanik kraftlos schaltbar ist, so dass während des Normalbetriebes der Türbetätigung Funktionsfähigkeitsprüfungen der einzelnen Elemente der Antriebe durchführbar sind.
Es erweist sich als Vorteil, dass alle elektrischen Antriebe gleichzeitig strom- und kraftlos schaltbar sind, wobei die Abtriebswelle damit für eine andere Antriebsart der Türbetätigung, insbesondere eine Handbetätigung, freigegeben ist.
Zweckmäßig enthalten die Antriebe jeweils ein untersetzendes Getriebe und einen stromgeregelten Motor mit Steuerelektronik. Dabei kommen als Motoren vorzugsweise stromgeregelte bürstenlose Gleichstrommotoren zum Einsatz.
Zum einen erweist es sich als vorteilhaft, dass jeder Motor mit seinem Gehäuse über eine Koppelmechanik an dem Strukturteil befestigt ist, wobei alle anderen Elemente des Antriebs starr mit dem Motor verbunden sind. Dabei stehen in einer besonderen Ausbildung der Antriebe vorteilhaft beide Motoren mit ein und demselben Getriebe in Verbindung, wobei das Getriebe gehäuseseitig starr mit dem Strukturteil verbunden ist und das Getriebe die Funktion einer Art Differentalgetriebe ausführt.
Zum anderen ist als zweckmäßige Alternative jedes Getriebe mit seinem Gehäuse über die Koppelmechanik an dem Strukturteil befestigt, wobei alle anderen Elemente des jeweiligen Antriebs starr mit dem Getriebe verbunden sind.
Als stark untersetzendes Getriebe wird vorzugsweise ein Planetengetriebe verwendet.

Die Abtriebswelle ist zweckmäßig parallel zu den Achsen der Antriebe angeordnet, wobei jeder Antrieb ein separates Zahnradpaar zur Kraftübertragung auf die Abtriebswelle aufweist.
Dabei können die Antriebe in einer vorteilhaften Variante unterschiedlich dimensioniert sein, wobei ein Antrieb als Hauptantrieb vorgesehen und der andere Antrieb als Nebenantrieb mit geringerer Leistung (als Hilfsantrieb bei Ausfall des Hauptantriebs) ausgebildet ist. Eine Reduzierung der Öffnungsgeschwindigkeit müsste bei Ausfall des Hauptantriebs allerdings in Kauf genommen werden.
In einer anderen vorzuziehenden Ausführungsform der Erfindung sind die auf die Abtriebswellen wirkenden Antriebe baugleich.
In diesem Fall wird in einer zweckmäßigen Variante die ebenfalls parallel zu den Achsen der Antriebe angeordnete Abtriebswelle von den Antrieben über ein gemeinsames Zahnradpaar zur Kraftübertragung auf die Abtriebswelle (1) angetrieben.
Eine besonders kompakte Bauweise wird bei baugleichen Antrieben dadurch erreicht, dass die Abtriebswelle in der gemeinsamen Achse der Antriebe angeordnet ist, wobei die Antriebe dazu Hohlwellen aufweisen. Zur Kraftübertragung auf die Abtriebswelle kann dabei ein innenverzahnter Teil der Hohlwellen der Getriebe in ein innenliegendes Zahnrad der Abtriebswelle eingreifen oder aber zwischen der Abtriebshohlwelle der Getriebe und der Abtriebswelle zur Türbetätigung sind eine Nut- und Federverbindung oder andere formschlüssige Verbindungen vorhanden.

Der Grundgedanke der Erfindung basiert auf der Überlegung, dass die Zuverlässigkeit eines vollständig automatischen Antriebs zur elektrischen Betätigung von Flugzeugtüren nur geeignet erhöht wird, wenn man eine Blockierung der gesamten Tür ausschließt, indem beim Erkennen des Antriebsversagens die Blockierung aufgehoben und durch einen redundanten Antrieb oder einen Notöffnungsmechanismus die Tür weiterhin geöffnet werden kann.
Dies ist erfindungsgemäß so vorgesehen, dass zwei komplett oder teilweise voneinander unabhängige Antriebseinheiten auf eine gemeinsame Abtriebswelle einwirken und im Bedarfs- oder Fehlerfall durch die Wegnahme des Antriebsgegenmomentes mittels einer Koppelmechanik ein Antrieb kraftlos geschaltet wird. Diese Koppelmechanik muss ähnliche Momente aufnehmen wie eine Getriebekupplung auf der Antriebsseite, ist aber ein funktioneller Bestandteil der Gehäusefunktion und bringt gegenüber einer Kupplung erhebliche Gewichtsvorteile. Die Antriebseinheiten können wahlweise einzeln oder zusammen betrieben werden und gestatten bei geeigneter Ansteuerung, wie z. B. abwechselnde Aktivierung der Antriebe oder Funktionsüberwachung durch Sensoren, das Aufdecken eines Fehlers innerhalb des Betätigungszeitraumes. Somit besteht die Möglichkeit, den vollen funktionalen Zustand frühzeitig wieder herzustellen.
Die Kraftlosschaltung eines der Antriebe gegenüber der Abtriebswelle erfolgt vorteilhaft in Form einer Koppelmechanik zwischen einem rotatorisch gelagerten Antriebsgehäuse und der Türstruktur oder Rumpfstruktur des Flugzeugs und kann sowohl elektrisch oder manuell als auch hydraulisch oder pneumatisch herbeigeführt werden.

Mit der erfindungsgemäßen Einrichtung ist es möglich, das elektrische Betätigen einer Tür eines Luftfahrzeugs mit sehr hoher Zuverlässigkeit bei geringstem Gewichtsaufwand zu gewährleisten, wobei mindestens zwei elektrische Antriebe auf eine Abtriebswelle, die Hebel der Türmechanik bewegt, einwirken und separat gegenüber der Abtriebswelle kraftlos geschaltet werden können. Dabei ist bei geeignetem Energiespeicher mit jedem der Antriebe im Havariefall auch eine Notöffnungsfunktion ausführbar oder es sind beide Antriebe von der Abtriebswelle trennbar zur Realisierung einer Handbetätigung.
Des weiteren können die einzelnen Antriebe und deren Kraftlosschaltung im Rahmen der normalen Türbetätigungsfunktion getestet und ein elektrischer Energiespeicher ebenfalls einfacher als andere Energiespeicher überprüft werden, so dass weniger Servicemaßnahmen zur Prüfung der Notöffnungsfunktion vorgenommen werden müssen.
Die erfindungsgemäße Antriebseinrichtung ist auch auf Frachttüren von Luftfahrzeugen anwendbar, wobei durch Einsatz elektrischer Antriebe für das Öffnen und Schließen (derzeit vornehmlich durch hydraulische Linearaktuatoren ausgeführt) wesentlich der Hauptnachteil (Lecköl) hydraulischer Komponenten überwunden sowie durch den zweiten Antrieb die funktionelle Sicherheit der Betätigung der Frachttüren erhöht wird.
Der Einsatz der erfindungsgemäßen Antriebseinrichtung ist keinesfalls auf die Luftfahrttechnik beschränkt, obwohl sie gerade hierfür wegen der vorgegebenen Gewichtslimitierung und Sicherheitsstandards konzipiert wurde. Weitere wesentliche Vorteile, die darin bestehen, dass bei einer erhöhten funktionellen Zuverlässigkeit auch noch Konzepte der (elektrischen) Notöffnung ermöglicht und damit die Wartungsintervalle der Türöffnungsmechanismen reduziert werden können, sind auch für beliebige andere automatisch betätigte Türen von großen Interesse.

Die Erfindung soll nachfolgend anhand von Ausführungsbeispielen näher erläutert werden. Die Zeichnungen zeigen:
- Fig. 1:: eine Prinzipskizze der erfindungsgemäßen Betätigungseinrichtung,
- Fig. 2:: eine bevorzugte Ausführung der erfindungsgemäßen Koppelmechanik,
- Fig. 3:: eine Schnittdarstellung orthogonal Antriebsachse der Koppelmechanik in drei unterschiedlichen Zuständen,
- Fig. 4:: eine Ausführungsform der Antriebseinheit mit reduzierten Komponenten,
- Fig. 5:: eine Gestaltungsform der Erfindung als Hohlwellenausführung,
- Fig. 6:: eine vorteilhafte Prinzipgestaltung der Betätigungseinrichtung an einer vorhandene Türöffnungsmechanik eines Flugzeugs.

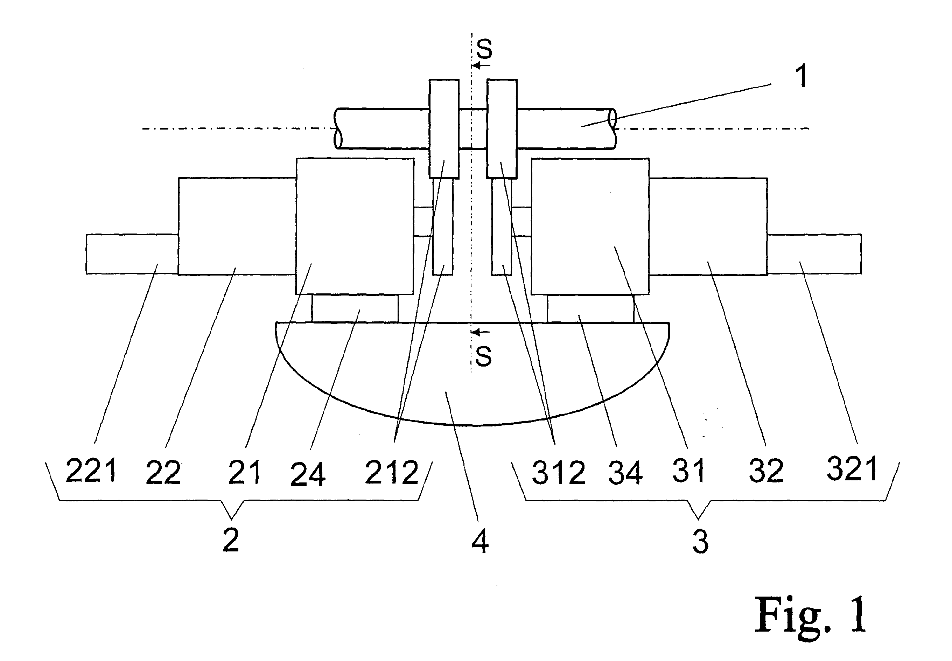

Die erfindungsgemäße Betätigungseinrichtung besteht in seinem Grundaufbau - wie in Fig. 1 dargestellt - aus einer Abtriebswelle 1, und zwei separaten Antriebseinheiten 2 und 3, die jeweils ein Getriebe 21, 31 sowie einen Motor 22, 32 mit Steuerelektronik 221, 321 enthalten. Das notwendige Antriebsgegenmoment der rotatorischen Antriebseinheit 2 und 3 wird über jeweils eine Koppelmechanik 24, 34 in ein Strukturteil 4 der Tür oder der Rahmenstruktur abgeleitet
Im Folgenden wird - ohne Beschränkung der Allgemeinheit - durchgängig von einer Betätigung (Öffnen/Schließen, Verriegeln/Entriegeln) einer Flugzeugtür, insbesondere einer Kabinentür eines Verkehrsflugzeugs, ausgegangen. Das erfindungsgemäße Prinzip ist jedoch auch für beliebige andere automatische Türen verwendbar und stützt sich nicht nur auf Flugkörper aller Art, obwohl sie wegen der Erzielung einer gewichtsminimalen Lösung für letztere besonders konzipiert wurde.

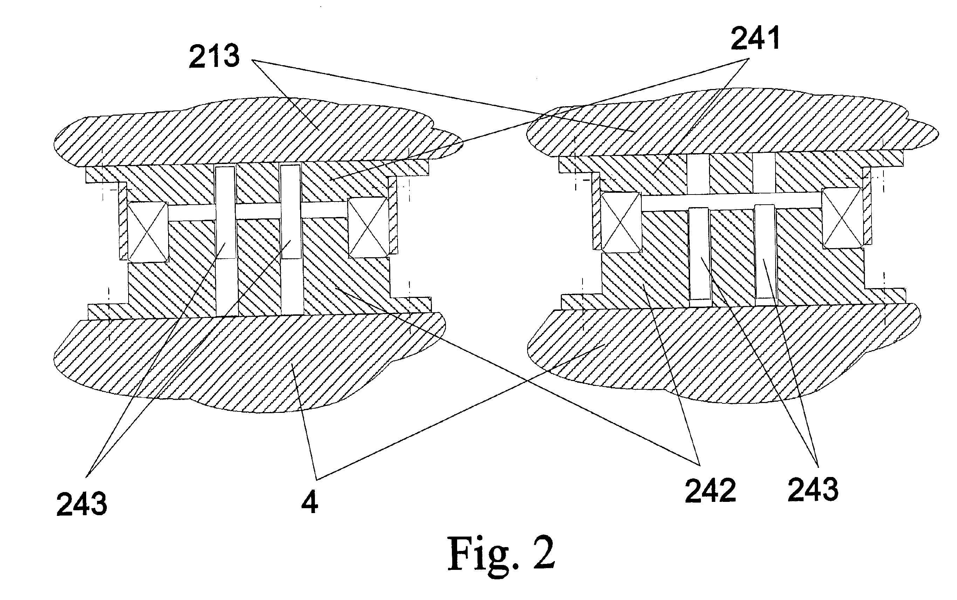

In Fig. 1 handelt es sich um eine vorteilhafte Ausführung der Erfindung zur Betätigung der Türmechanik eines Flugzeugs, an der das Grundprinzip der Erfindung erläutert werden soll.
Die Abtriebswelle 1, an der wenigstens ein Hebelarm der Türmechanik starr gekoppelt ist und die zum Zwecke der Betätigung der Türöffnung oder auch der Verriegelung nur um einen bestimmten Winkel (meist kleiner als 270°) unter erheblicher Last gedreht werden muss, wird von zwei separaten Motoren 22, 32 über zwei Zahnräderpaare 25 und 35 und zwei unabhängige Getriebe 21, 31 angetrieben. Die Motoren 22, 32 werden stromgeregelt betrieben und zu diesem Zweck von zwei Elektronikeinheiten 23, 33 angesteuert. Wegen der großen Drehmomente und der sehr guten Stromregelbarkeit werden bevorzugt bürstenlose Gleichstrommotoren verwendet. Zur weiteren Erhöhung der Abtriebskraft sind als Getriebe 21, 31 - auch wegen ihres rotationssymmetrischen Aufbaus - Planetengetriebe vorgesehen.
Zur Aufnahme der Antriebsgegenmomente sind die Koppelmechaniken 24, 34 in Fig. 1 an den Getrieben 21, 31 angebracht. Sie sind - wie in Fig. 2 als Längsschnitt durch die Koppelmechanik 24 dargestellt - als eine sperrbare Drehführung ausgelegt, wobei der drehbar gelagerte Drehteil 241 ein Gehäuse 212 des gesamten Antriebs 2 (in Fig. 1 die Gehäuse von Getriebe 21 und 31, an denen jeweils alle anderen Elemente der Antriebe 2, 3 starr befestigt sind) umfasst. Zwischen dem am Strukturteil 4 befestigten Fußteil 242 und dem mit einem Antriebsgehäuse 212 verbundenen Drehteil 241 sind mehrere geführte Blockierbolzen 243 eingeschoben. Die Blockierbolzen 243, die die Drehführung im Normalbetrieb (gekoppelter Zustand) des Antriebs 2 zu einer starren Antriebshalterung ausbilden, werden im Bedarfs- oder Havariefall aus dem Drehteil 241 entfernt, indem sie in das Fußteil 242 hinein verschoben werden. Es ist auch möglich, die Bolzenbewegung durch Versenken im Drehteil 241 zu realisieren, gegebenenfalls auch in Analogie zur Funktion der Stifte eines Sicherheitsschlosses.

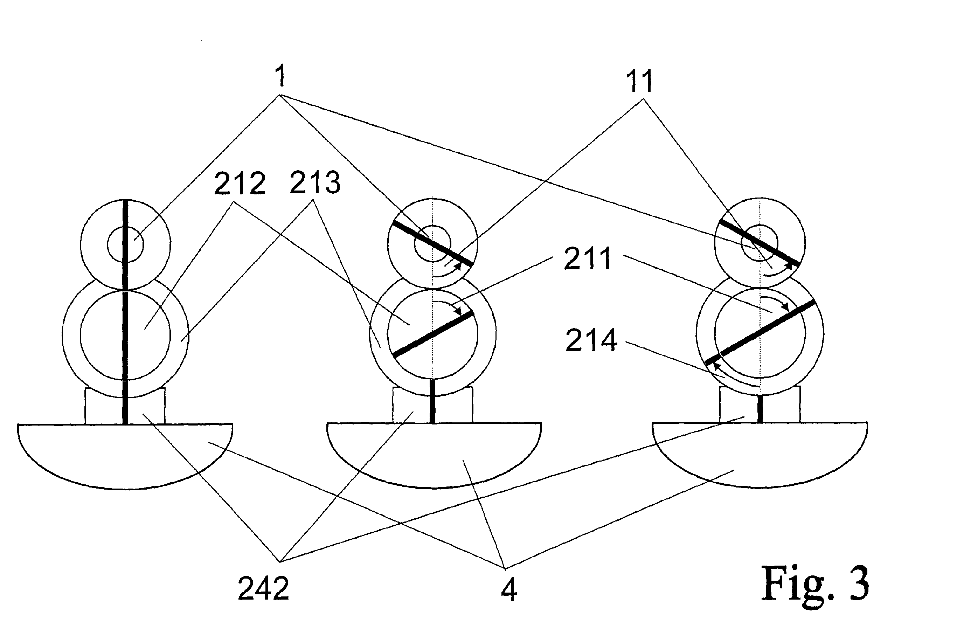

In Fig. 3 ist das Funktionsprinzip der Koppelmechanik 24, 34 in drei unterschiedlichen Zuständen in einer Schnittdarstellung orthogonal zu den Achsrichtungen von Abtriebswelle 1 und Getriebe 21 dargestellt.
In der linken Teildarstellung ist der Anfangszustand des in Fig. 1 dargestellten linken Antriebs 2 (Schnittebene S - S) abgebildet. Zur Erläuterung des Prinzips sind auf allen geschnittenen dargestellten Komponenten, Abtriebswelle 1, Abtriebszahnrad 212 und Gehäuse 213 des Getriebes 21 Strichmarkierungen angebracht, die im Anfangszustand eine einheitliche Ausrichtung haben.
Die mittlere Teilansicht von Fig. 3 zeigt den resultierenden Drehwinkel 111 der Abtriebswelle 1 nach dem Aktivieren des Motors 22 unter Einwirkung des Getriebes 21 auf das Abtriebszahnrad 212 bei gekoppelter, d.h. starrer Koppelmechanik 24, wobei von der Koppelmechanik 24 lediglich der Fußteil 242 zu sehen ist, da der Drehteil 241 am Gehäuse 213 des Getriebes 21 integriert ist. Der Drehwinkel 211 des Abtriebszahnrades 212 des Getriebes 21 gegenüber dem Fußteil 242 der Koppelmechanik 24 ist hier null. In diesem Fall wird über die Antriebseinheit 2 die Kraft auf die Abtriebswelle 1 übertragen.
Die rechte Teilansicht von Fig. 3 zeigt den entstehenden Drehwinkel 11 der Abtriebswelle 1 nach dem Aktivieren des (in Fig. 1 rechten) Motors 32. Durch Wirkung des Getriebes 31 auf das Abtriebszahnrad 312 bei gekoppelter Koppelmechanik 34 und entkoppelter Koppelmechanik 24 führt das Getriebe 21 mit seinem Gehäuse 213 eine mit dem Antriebszahnrad 212 gleichsinnige Drehung aus. Der Drehwinkel 214 des Getriebegehäuses 213 gegenüber der Koppelmechanik 24 ist dabei höchstens genauso groß wie der Drehwinkel 11 der Abtriebswelle 1. Hier wird über die Abtriebwelle 1 das Abtriebszahnrad 212 und über die internen Reibmomente (im Fehlerfall Blockiermomente) des Getriebes 21 der gesamte Antrieb 2 inklusive des Motors 22 mitgedreht. In diesem Fall wird über den linken Antrieb 2 keine Kraft übertragen oder aufgenommen, da die Koppelmechanik 24 drehfrei und damit der Antrieb 2 kraftlos geschaltet wurde.
Die Steuerung der Koppelmechanik 24 bzw. 34 kann dabei durch mehrere, bei Bedarf auch in einer Logik-Schaltung kombinierte Auslösevorgänge gesteuert werden. Zum einen ist das bei den stromgeregelten Motoren 22 und 32 einfach möglich, indem bei Überscheitung einer bestimmte Stromstärke die Koppelmechanik 34 entkoppelt wird, falls der Motor 32 eine überhöhte Stromaufnahme zeigt, oder die Koppelmechanik 24 wird entkoppelt, wenn der Motor 22 nicht unter dem zugelassenen Strommaximum bleibt. Zum anderen kann die Entkoppelung der Koppelmechaniken 24 oder 34 davon ausgelöst werden, dass der zugehörige Motor 22 bzw. 32 trotz entsprechender Ansteuerung nicht dreht, wobei dazu an jeder der Motorwellen Positionssensor, z. B. ein Rotationsresolver, Encoder, Hallsensor etc., angebracht wird. Eine dritte mögliche Sicherungsvariante sieht einen Türöffnungssensor vor, der bei angesteuertem Motor 22 und/oder 32 die Umsetzung der Motorantriebsleistung in eine Türbewegung (z.B. Drehwinkel- bzw. Positionssensor an der Abtriebswelle 1) überwacht. In einer vierten Variante werden beide Motoren 22 und 32 mit unterschiedlichen Sensorsystemen ausgerüstet, indem jeder Motor z.B. mit einer Stromüberwachung (Schwelle) und mit einem Rotationssensor, z.B. Winkelaufnehmer, ausgestattet ist, um auch bei Ausfall z.B. des Motors 22 automatisch den gesamten Antrieb 2 durch die Kopplungsmechanik 24 zu entkoppeln und ggf. eine Fehlermeldung auszugeben.

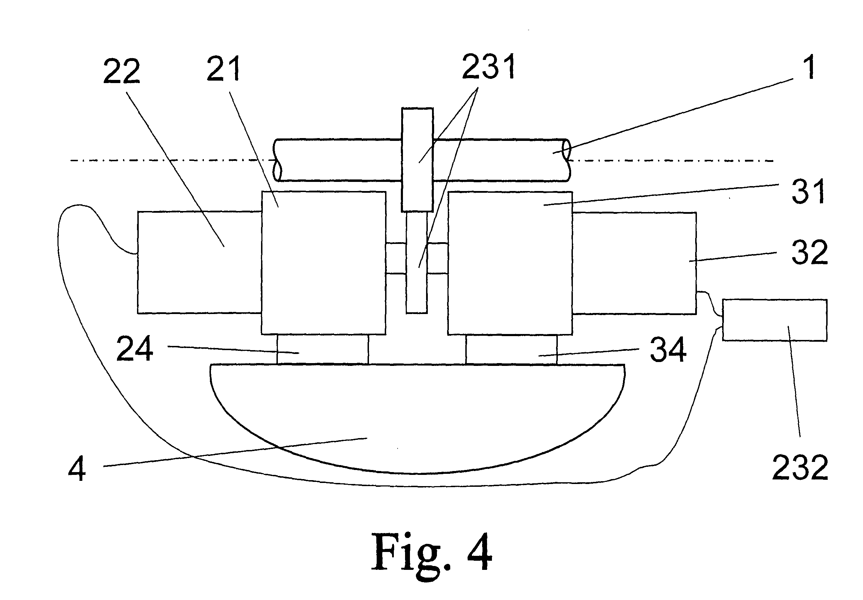

In Fig. 4 ist eine Ausführungsform der Betätigungseinrichtung mit reduzierten Komponenten dargestellt. Hier arbeiten beide Getriebe 21, 31 auf ein gemeinsames Abtriebszahnrad 231 und die Motoren 22, 32 werden über eine gemeinsame Elektronikeinheit 232 angesteuert. Daraus ergibt sich eine Gewichtsersparnis bei nur leicht reduzierter Zuverlässigkeit, wenn außer der Motorstromüberwachung zusätzliche Sensoren die Drehung der Motoren 22 und 32 überwachen.

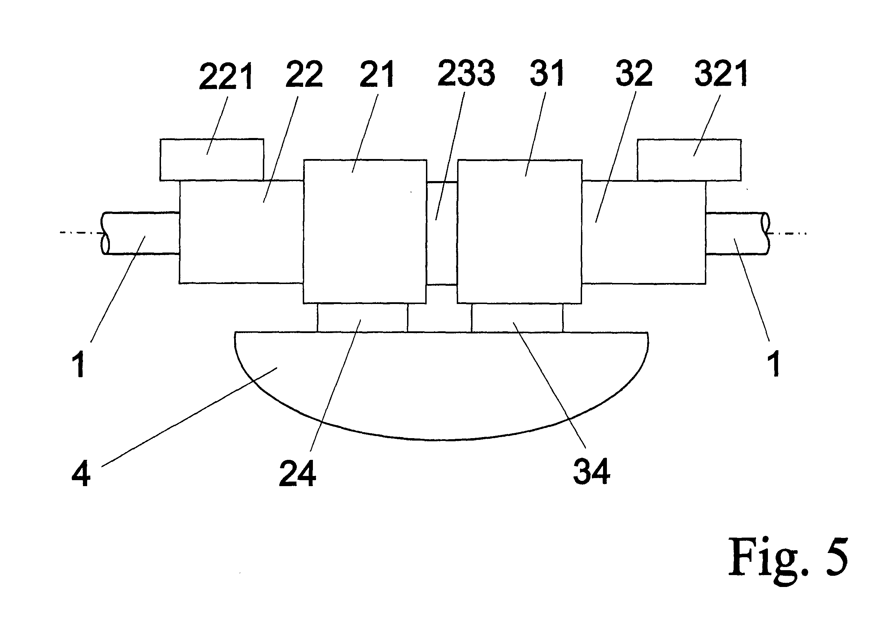

Fig. 5 zeigt eine besonders kompakte Bauweise der erfindungsgemäßen Einrichtung unter Verwendung von Antriebseinheiten 2, 3, die in Hohlwellenausführung gefertigt sind. Hierbei entfallen die in Fig. 1 dargestellten Abtriebszahnräder 212, 312, da die Abtriebswelle 1 direkt mit den Ausgängen der Getriebe 21, 31 in formschlüssiger Weise verbunden werden kann, beispielsweise in Form einer Nut- und Federverbindung. Alternativ ist die Kraftübertragung auch mit einer Innenverzahnung der Hohlwelle 233 und darin kämmendem Zahnrad der Abtriebswelle 1 realisierbar. Durch die Hohlwellenausführung ergibt sich eine weitere Gewichtsersparnis bei gleicher Zuverlässigkeit, jedoch mit einem komplexeren Aufbau, der die konstruktiven Freiheiten einschränkt. Dagegen werden jedoch Spiel und Justieraufwand von Abtriebswelle 1 und Hohlwelle 233 verringert.

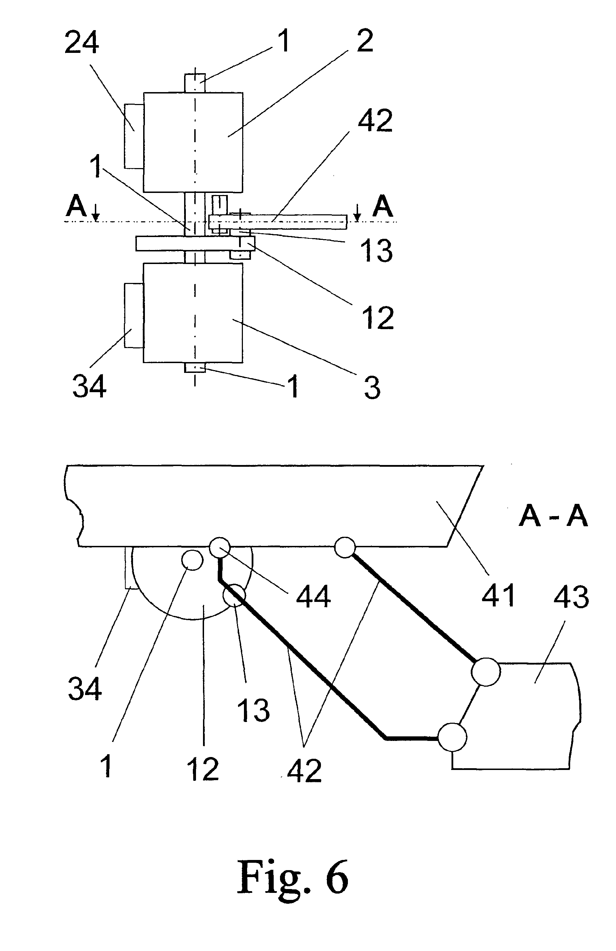

Fig. 6 greift die Ausführungsform von Fig. 5 auf und zeigt die mögliche Einbindung der erfindungsgemäßen Betätigungseinrichtung in eine vorhandene Türöffnungsmechanik. Die spezielle Funktionsweise der Türmechanik ist hierbei nur von sekundärer Bedeutung, da die Erfindung lediglich eine Drehachse zur Ausführung der Türbewegung benötigt. Eine solche Drehachse, die der Abtriebswelle 1 bei der erfindungsgemäßen Einrichtung entspricht, ist eigentlich bei allen bekannten Türsystemen von Verkehrsflugzeugen vorhanden.
Die in diesem Beispiel stilisiert dargestellte Türmechanik geht davon aus, dass die Tür 41 über Hebelarme 42, die zugleich als Stütz- und Führungsarme die Tür tragen und führen, sowohl aus dem Flugzeugrumpf 43 ausgehoben als auch seitwärts parallel zur Außenwand des Flugzeugrumpfes 43 geführt werden kann. Selbst bei diesem Bewegungsablauf mit Geradführungskomponenten ist die erfindungsgemäße Einrichtung - als eine Art Rotationsaktuator - einsetzbar. Die komplette Betätigungseinrichtung ist sogar infolge ihres geringen Gewichts für den Einbau in einem Strukturteil 4 der Tür 41 geeignet, so dass auch in bestehenden Türsysteme vorhandene Linearaktuatoren allein durch Änderung der Türkonstruktion ersetzt werden könnten.
Bei der gewählten Türmechanik von Fig. 6 wird die Tür 41 - gemäß der unteren Draufsicht - gegenüber einem Hebelarm 42 (auch engl.:"Support Arm") gedreht und weitere Hebelarme 42 im Sinne von Führungsgestänge ("Guide Arms"), an denen kein Antrieb 2, 3 angreift und von denen nur einer stellvertretend dargestellt ist, übernehmen die Kräfte, die zum Führen der Tür 41 notwendig sind.
Dieselben Hebelarme 42 sind auch von der erfindungsgemäßen Betätigungseinrichtung in gleicher Weise bedienbar, wenn die Antriebe 2, 3 an der Struktur des Flugzeugrumpfes 43 angebracht sind (nicht dargestellt). Selbst die Befestigung an dem als "Support Arm" fungierenden Hebelarm 42 (bzw. zwischen zwei solchen vertikal übereinander liegenden Armen, ebenfalls ohne Darstellung) ist durchaus realisierbar.
Die obere Seitenansicht zeigt nochmals die Ausführungsform der Erfindung gemäß Fig. 5 zusammengefasst als komplette Hohlwellen-Antriebe 2 und 3 mit den stilisiert angedeuteten Koppelmechaniken 24 und 34. Die Abtriebswelle 1 ist in beide Hohlwellen (nicht sichtbar) eingebettet und besitzt zur Kraftübertragung auf den angetriebenen Hebelarm 42 eine Exzenterscheibe 5 mit Führungsbolzen 51, mit deren Drehung der Hebelarm 42 um das Hebelgelenk 44 gegenüber der Tür 41 geschwenkt wird. Durch die Wirkung des führenden Hebelarms 42, der wie der angetriebene Hebelarm 42 mit der Struktur des Flugzeugrumpfes 43 drehbar verbunden ist, wird die Tür 41 in paralleler Orientierung zur Außenwand des Flugzeugs - gemäß der Draufsicht von Fig. 6 - je nach Drehrichtung der Antriebe 2 und 3 im wesentlichen lateral zur Richtung der Abtriebswelle 1 bewegt.
Wie bereits mehrfach betont, ist die erfindungsgemäße Betätigungseinrichtung nicht auf Flugzeugtüren mit Geradführung beschränkt, sondern ist ebenso auf um eine Drehachse geschwenkte Türen anwendbar, indem die Abtriebswelle 1 der Betätigungseinrichtung in diese Drehachse eingebracht wird.

### Bezugszeichenliste

- 1: Abtriebswelle
- 11: Drehwinkel
- 12: Exzenterscheibe
- 13: Führungsbolzen

- 2, 3: Antrieb
- 211: Drehwinkel (des Abtriebszahnrades)
- 212, 312: Abtriebszahnräder
- 213: Gehäuse
- 214: Drehwinkel (des Getriebegehäuses)
- 21, 31: Getriebe
- 22, 32: Motor
- 221, 321: Steuerelektronik
- 231: gemeinsames Abtriebszahnradpaar
- 232: gemeinsame Elektronikeinheit
- 233: Hohlwelle
- 24, 34: Koppelmechanik
- 241: Drehteil
- 242: Fußteil
- 243: Blockierbolzen

- 4: Strukturteil
- 41: Tür
- 42: Hebelarm
- 43: Flugzeugrumpf
- 44: Hebelgelenk

## Patentansprüche

1. Einrichtung zum elektrischen Betätigen einer Tür eines Luftfahrzeugs, **dadurch gekennzeichnet, dass**
zur Betätigung der Tür (41) eine elektrisch angetriebene Abtriebswelle (1) vorgesehen ist, wobei diese Abtriebswelle (1) an wenigstens einen Hebelarm ( ) einer Türmechanik drehfest gekoppelt ist und durch Drehung der Abtriebswelle (1) den Hebelarm (42) der Türmechanik um einen vorbestimmten Winkel verschwenkt.

2. Einrichtung nach Anspruch 1, **dadurch gekennzeichnet, dass**
mindestens zwei voneinander unabhängige elektrische Antriebe (2, 3) auf die Abtriebswelle (1) einwirken und die Antriebe (2, 3) jeweils über eine Koppelmechanik (24; 34) zur Aufnahme der der Antriebsdrehrichtung entgegengesetzten Drehmomente an einem Strukturteil (4), gegenüber dem der Hebelarm (42) der Türmechanik geschwenkt wird, befestigt sind, wobei die Koppelmechanik (24; 34) in Rotationsrichtung des Antriebs (2; 3) entkoppelbar ist.

3. Einrichtung nach Anspruch 2, **dadurch gekennzeichnet, dass**
die Antriebe (2; 3) an einem Strukturteil (4) der Tür (41) befestigt sind.

4. Einrichtung nach Anspruch 2, **dadurch gekennzeichnet, dass**
die Antriebe (2; 3) an einem beweglichen Hebelarm (42) der Tür (41) befestigt sind.

5. Einrichtung nach Anspruch 2, **dadurch gekennzeichnet, dass**
die Antriebe (2; 3) an einem Strukturteil (4) des Flugzeugrumpfes (43) befestigt sind.

6. Einrichtung nach Anspruch 2, **dadurch gekennzeichnet, dass**
die Koppelmechanik (24; 34) als sperrbare Drehführung zwischen einem Strukturteil (4) und einem Gehäuseteil der Antriebe (2; 3) ausgelegt ist.

7. Einrichtung nach Anspruch 6, **dadurch gekennzeichnet, dass**
zwischen dem am Strukturteil (4) befestigten Fußteil (242) und dem mit einem Antriebsgehäuse verbundenen Drehteil (241) der Koppelmechanik (24; 34) Blockierbolzen (243) eingeschoben sind, die aus wenigstens einem Teile (241; 242) der Koppelmechanik (24; 34) entfernbar sind.

8. Einrichtung nach Anspruch 2, **dadurch gekennzeichnet, dass**
die Antriebe (2; 3) gleichzeitig auf die Abtriebswelle (1) eine Antriebsfunktion ausüben.

9. Einrichtung nach Anspruch 2, **dadurch gekennzeichnet, dass**
die Antriebe (2, 3) abwechselnd auf die Abtriebswelle (1) eine Antriebsfunktion ausüben, wobei der passive Antrieb (2; 3) stromlos und mittels der Koppelmechanik (24; 34) kraftlos schaltbar ist, so dass während des Normalbetriebes der Türbetätigung Funktionsfähigkeitsprüfungen der einzelnen Elemente der Antriebe (2, 3) durchführbar sind.

10. Einrichtung nach Anspruch 2, **dadurch gekennzeichnet, dass**
alle elektrischen Antriebe (2, 3) strom- und kraftlos schaltbar sind, wobei die Abtriebswelle (1) damit für eine andere Antriebsart der Türbetätigung, insbesondere eine Handbetätigung, freigegeben ist.

11. Einrichtung nach Anspruch 2, **dadurch gekennzeichnet, dass**
die Antriebe (2, 3) jeweils ein untersetzendes Getriebe (21; 31) und einen stromgeregelten Motor (22; 32) mit Steuerelektronik (221; 321) enthalten.

12. Einrichtung nach Anspruch 11, **dadurch gekennzeichnet, dass**
der Motor (22; 32) ein stromgeregelter bürstenloser Gleichstrommotor ist.

13. Einrichtung nach Anspruch 11, **dadurch gekennzeichnet, dass**
der Motor (22; 32) mit seinem Gehäuse über die Koppelmechanik (24; 34) an dem Strukturteil (4) befestigt ist, wobei alle anderen Elemente des Antriebs (2; 3) starr mit dem Motor (22; 32) verbunden sind.

14. Einrichtung nach Anspruch 11, **dadurch gekennzeichnet, dass**
beide Motoren (22, 32) mit ein und demselben Getriebe (21) in Verbindung stehen, wobei das Getriebe (21) gehäuseseitig starr mit dem Strukturteil (4) verbunden ist.

15. Einrichtung nach Anspruch 11, **dadurch gekennzeichnet, dass**
das Getriebe (21; 31) mit seinem Gehäuse über die Koppelmechanik (24; 34) an dem Strukturteil (4) befestigt ist, wobei alle anderen Elemente des Antriebs (2; 3) starr mit dem Getriebe (21; 31) verbunden sind.

16. Einrichtung nach Anspruch 11, **dadurch gekennzeichnet, dass**
das Getriebe (21; 31) ein Planetengetriebe ist.

17. Einrichtung nach Anspruch 2, **dadurch gekennzeichnet, dass**
die Abtriebswelle (1) parallel zu den Achsen der Antriebe (2; 3) angeordnet ist, wobei jeder Antrieb (2; 3) ein separates Zahnradpaar (221; 321) zur Kraftübertragung auf die Abtriebswelle (1) aufweist.

18. Einrichtung nach Anspruch 17, **dadurch gekennzeichnet, dass**
die Antriebe (2; 3) unterschiedlich dimensioniert sind, wobei ein Antrieb (2; 3) als Hauptantrieb vorgesehen und der andere Antrieb als Nebenantrieb mit geringerer Leistung ausgebildet ist.

19. Einrichtung nach Anspruch 17, **dadurch gekennzeichnet, dass**
die auf die Abtriebswelle (1) wirkenden Antriebe (2, 3) baugleich sind.

20. Einrichtung nach Anspruch 19, **dadurch gekennzeichnet, dass**
die Abtriebswelle (1) parallel zu den Achsen der Antriebe (2, 3) angeordnet ist, wobei die Antriebe (2, 3) ein gemeinsames Zahnradpaar (231) zur Kraftübertragung auf die Abtriebswelle (1) aufweisen.

21. Einrichtung nach Anspruch 19, **dadurch gekennzeichnet, dass**
die Abtriebswelle (1) in der gemeinsamen Achse der Antriebe (2; 3) angeordnet ist, wobei die Antriebe (2, 3) Hohlwellen (233) aufweisen.

22. Einrichtung nach Anspruch 21, **dadurch gekennzeichnet, dass**
zur Kraftübertragung auf die Abtriebswelle (1) ein innenverzahnter Teil der Hohlwellen (233) der Getriebe (21; 31) in ein innenliegendes Zahnrad der Abtriebswelle (1) eingreift.

23. Einrichtung nach Anspruch 21, **dadurch gekennzeichnet, dass**
zur Kraftübertragung auf die Abtriebswelle (1) zwischen der Hohlwelle (233) des Getriebes (21; 31) und der Abtriebswelle (1) eine formschlüssige Verbindung, vorzugsweise eine Nut- und Federverbindung, vorhanden ist.
